# EUROPEAN PATENT SPECIFICATION

(11) **EP 4 459 639 B1**
(45) Date of publication and mention of the grant of the patent: **15.04.2026**
(21) Application number: 23904828.3
(22) Date of filing: 27.10.2023
(51) Int. Cl.: H01B 5/02, H05K 7/06, H01M 50/503, H01M 50/505, H01M 50/526, H02G 5/02

(54) **BUS BAR**
SAMMELSCHIENE
BARRE OMNIBUS

(30) Priority: 17.03.2023 JP 2023042658
(43) Date of publication of application: 06.11.2024
(73) Proprietor: Suncall Corporation, Kyoto-shi, Kyoto 615-8555 (JP)
(72) Inventor: MUKAI, Yasuhiro, Kyoto-shi, Kyoto 6158555 (JP)
(74) Representative: Hoffmann Eitle
(86) International application number: PCT/JP2023/038814
(87) International publication number: WO 2024/195172

(56) References cited:
- DE-A1- 19 960 266
- JP-U- 3 109 953
- JP-U- S6 046 505
- US-A1- 2011 039 132
- US-B1- 9 184 517

## Description

### Technical Field

The present invention relates to a bus bar whose abnormal heat generation can be detected.

### Background Art

In general, it is known to use a bus bar in connecting energizable members (for example, a battery installed in an electric vehicle, a hybrid car, etc.). For example, as described in Non-Patent Literature 1, it is common to use a plurality of such bus bars when connecting energizable members (for example, a battery installed in an electric vehicle, a hybrid car, etc.).

### Citation List

### Non-Patent Literature

Non-Patent Literature 1: "Bus bar", [online], SUNCALL CORPORATION, [searched on March 1, 2023], Internet (https://www.suncall.co.jp/shunt-sensor-solution/busbar/)

### Summary of the Invention

### Technical Problem

Incidentally, when a plurality of bus bars are used as described above, if any one of the plurality of bus bars generates abnormal heat, the abnormally heated bus bar may fail.

However, at this time, in order to identify which bus bar among the plurality of bus bars has failed, the plurality of bus bars needs to be inspected one by one. This poses a problem that it takes a lot of time and effort to find the failed bus bar.

Accordingly, in view of the foregoing problem, an object of the present invention is to provide a bus bar that can be simply and easily identified as having generated abnormal heat.

### Solution to the Problem

The foregoing object of the present invention is achieved by the following means. It is noted that reference signs in an embodiment to be described later are added in parentheses, but the present invention is not limited thereto.

According to a first aspect of the present invention, a bus bar (1) having a bus bar main body (2) and an insulator (3) covering a part of the bus bar main body (2) is characterized in that the insulator (3) has an interior (S) formed hollow and is made of heat-shrinking resin, and the bus bar main body (2) is inserted into the hollow, and an identification member (4, 4A) that can identify the abnormal heat generation when the insulator (3) is heat-shrunk due to abnormal heat generation is provided in the hollow.

According to a second aspect of the present invention, the bus bar (1) set forth in the first aspect is characterized in that the bus bar main body (2) has through holes (left bolt hole 2a1, right bolt hole 2b1) formed at both end sides (left side surface 2a, right side surface 2b), and in fixing a part of the insulator (3) to the bus bar main body (2), the insulator (3) is fixed to the bus bar main body by heat-shrinking both end sides of the insulator so as not to come in contact with the through holes (left bolt hole 2a1, right bolt hole 2b1).

### Advantageous Effects of the Invention

Next, advantageous effects of the present invention will be described with reference signs in the drawings. It is noted that reference signs in an embodiment to be described later are added in parentheses, but the present invention is not limited thereto.

According to the first aspect of the present invention, the identification member (4, 4A) that can identify abnormal heat generation when the insulator (3) is heat-shrunk due to the abnormal heat generation is provided in the hollow of the insulator (3). It is thereby possible to simply and easily identify that the bus bar has generated abnormal heat.

According to the second aspect of the present invention, since the insulator (3) does not come in contact with the through holes (left bolt hole 2a1, right bolt hole 2b1), a malfunction such as current not flowing when the energizable members are connected can be prevented.

### Brief Description of the Drawings

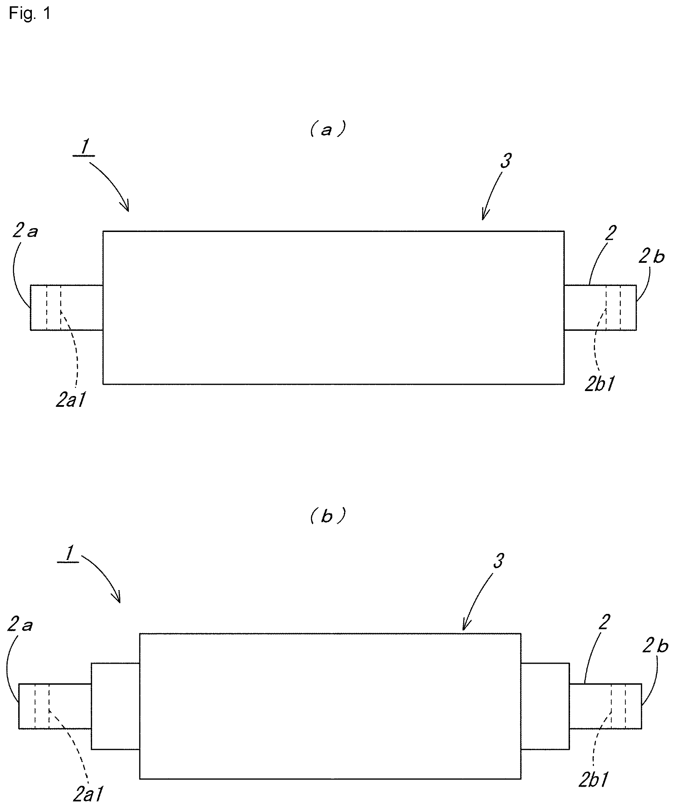

[FIG. 1] FIG. 1(a) is a side view showing a state in which an insulator is not heat-shrunk in a bus bar according to an embodiment of the present invention, and FIG. 1(b) is a side view showing a state in which both ends of the insulator are heat-shrunk and fixed to a bus bar main body in the bus bar according to the same embodiment.

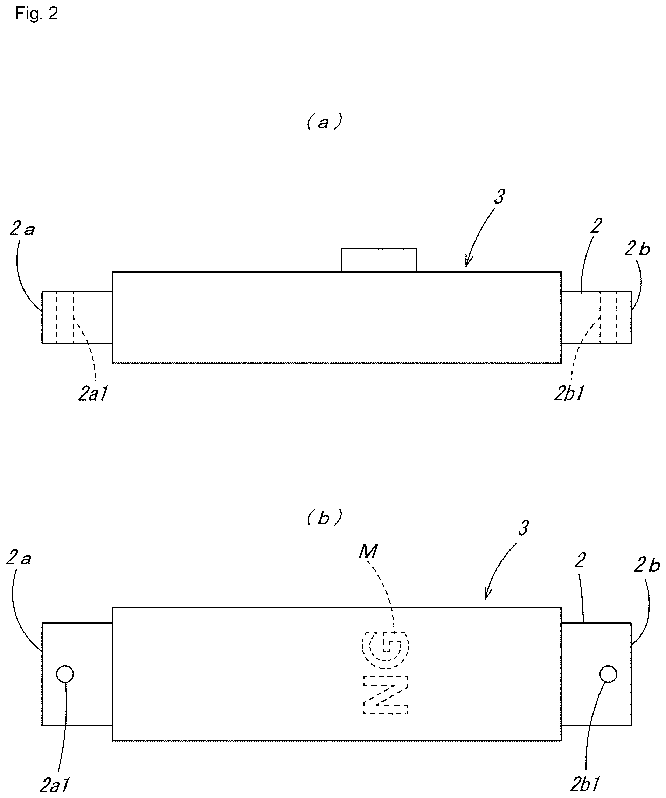

[FIG. 2] FIG. 2 show a state in which the bus bar according to the same embodiment has generated abnormal heat, and FIG. 2(a) is a side view and FIG. 2(b) is a plan view.

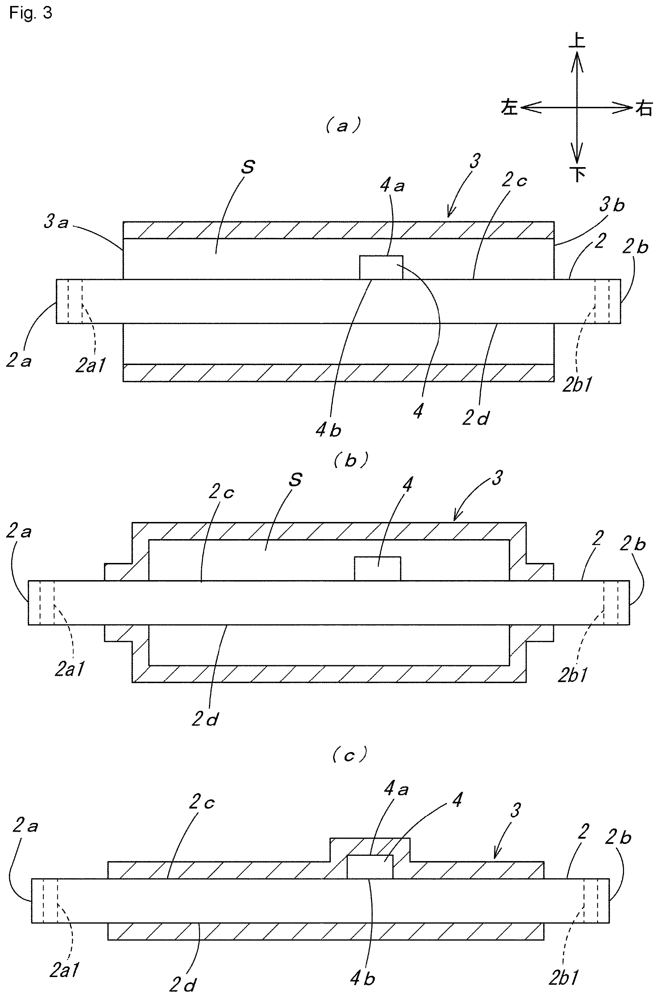

[FIG. 3] FIG. 3(a) shows an insulator according to the same embodiment in a longitudinal sectional view and is a side view showing a state in which the bus bar main body is arranged inside the insulator, FIG. 3(b) is a side view showing a state in which both ends of the insulator are fixed to the bus bar main body from the state shown in FIG. 3(a), and FIG. 3(c) is a side view showing a state in which the bus bar main body has generated abnormal heat and the insulator has been completely fixed to the bus bar main body from the state shown in FIG. 3(b).

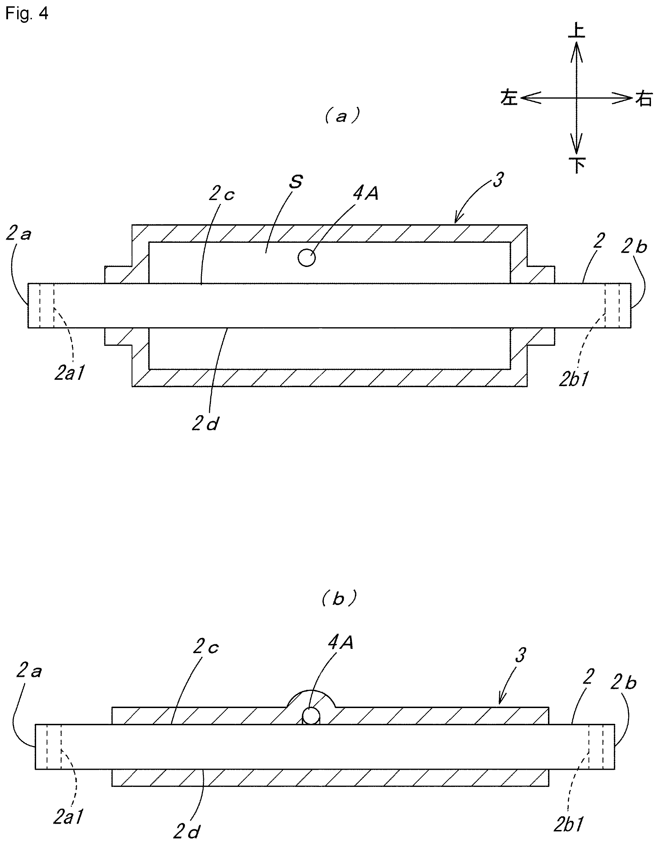

[FIG. 4] FIG. 4(a) shows the insulator according to the same embodiment in a longitudinal sectional view and is a side view in which the bus bar main body is arranged inside the insulator, and then both ends of the insulator are fixed to the bus bar main body, and an identification member according to another embodiment is arranged inside the insulator, and FIG. 4(b) is a side view showing a state in which the bus bar main body has generated abnormal heat and the insulator has been completely fixed to the bus bar main body from the state shown in FIG. 4(a).

### Description of Embodiment

Hereinafter, a bus bar according to an embodiment of the present invention will be specifically described with reference to the drawings. It is noted that, in the following description, when vertical and horizontal directions are indicated, it shall mean vertical and horizontal directions when viewed from the front of the figure.

### <Brief Description of Bus Bar>

A bus bar 1 shown in FIG. 1 can be simply and easily detected to have generated abnormal heat. Specifically, the bus bar 1 shown in FIG. 1 is mainly composed of a bus bar main body 2 and an insulator 3. In the following, each configuration will be described in detail.

### <Description of Bus bar main body>

The bus bar main body 2 is made of metal such as copper, and as shown in FIG. 3, is formed, for example, in the shape of a thick plate with a thickness of about 3 mm to 5 mm, and is formed to be long and rectangular in cross section. As shown in FIG. 3, in the bus bar main body 2, a left bolt hole 2a1 having a circular shape in plan view (see FIG. 2(b)) is vertically penetratingly provided on a left side surface 2a side, and a right bolt hole 2b1 having a circular shape in plan view (see FIG. 2(b)) is vertically penetratingly provided on a right side surface 2b side.

### <Description of Insulator>

The insulator 3 is made of an insulating material formed of heat-shrinkable resin composed of a thermosetting resin elastomer, etc., and has flexibility. As shown in FIG. 3(a), such an insulator 3 has an interior S formed hollow and is formed into a rectangular cylindrical shape in cross section, a left side surface 3a and a right side surface 3b thereof are open.

### <Description of Manufacturing Method of Bus Bar>

In manufacturing the bus bar 1 thus configured, first, as shown in FIG. 3(a), the bus bar main body 2 is inserted into the interior S of the insulator 3. At this time, the left bolt hole 2a1 is exposed to the outside and located on the left side surface 3a side of the insulator 3, and the right bolt hole 2b1 is exposed to the outside and located on the right side surface 3b side of the insulator 3 (see also FIG. 1(a)).

Further, as shown in FIG. 3(a), an identification member 4 is provided in the interior S of the insulator 3. The identification member 4 is made of metal or the like (including non-metals such as heat-resistant resin and heat-resistant glass) and, as shown in FIG. 3(a), is formed in a rectangular shape when viewed from the side. As shown in FIG. 3(a), the identification member 4 has a lower surface 4b fixed slightly on the right side surface 2b side from the center of an upper surface 2c of the bus bar main body 2. Further, the identification member 4 has an upper surface 4a shown in FIG. 3(a) carved with the letter M as shown in FIG. 2(b) ("NG" is exemplified in the figure). The identification member 4 is preferably made of metal in consideration of thermal conductivity and the like.

Next, from the state shown in FIG. 3(a), heat is applied to the left side surface 3a side of the insulator 3 shown in FIG. 3(a), and heat is applied to the right side surface 3b side of the insulator 3 shown in FIG. 3(a). Thereby, as shown in FIG. 3(b), the left side surface 3a side of the insulator 3 is heat-shrunk and fixed to the upper surface 2c and a lower surface 2d on the left side surface 2a side of the bus bar main body 2. Further, as shown in FIG. 3(b), the right side surface 3b side of the insulator 3 is heat-shrunk and fixed to the upper surface 2c and the lower surface 2d on the right side surface 2b side of the bus bar main body 2. Thereby, the insulator 3 is positioned and fixed to the bus bar main body 2.

Accordingly, the bus bar 1 shown in FIG. 1(b) is manufactured in this manner.

### <Description of Usage Example of Bus Bar>

Incidentally, a plurality of bus bars 1 manufactured as described above are used when connecting energizable members (for example, a battery installed in an electric vehicle, a hybrid car, etc.), as described in Non-Patent Literature 1.

At this time, when the bus bar main body 2 generates abnormal heat, the insulator 3 is heat-shrunk due to the heat, and as shown in FIG. 3(c), the insulator 3 is completely fixed to the upper surface 2c and the lower surface 2d of the bus bar main body 2. At this time, as shown in FIG. 3(c), the insulator 3 comes in close contact with the upper surface 4a of the identification member 4. Therefore, this part appears to be protruding as shown in FIG. 2(a) and the carved letter M ("NG" is exemplified in the figure) stands out from the insulator 3 due to the close contact of the insulator 3 with the upper surface 4a of the identification member 4 as shown in FIG. 2(b) and can be identified from the outside. Accordingly, the abnormally heated bus bar 1 can be simply and easily identified.

Thus, by doing so, which bus bar 1 has generated abnormal heat can be simply and easily identified even when a plurality of bus bars 1 are used.

### <Description of Modification>

Note that the shape and the like shown in the present embodiment are merely examples, and various modifications and changes can be made within the scope of the gist of the present invention described in the claims. For example, in the present embodiment, an example has been shown in which the left side surface 3a side and the right side surface 3b side of the insulator 3 are heat-shrunk and fixed to the bus bar main body 2. However, the present invention is not limited thereto, and any place may be used as long as the insulator 3 can be positioned and fixed to the bus bar main body 2. That is, any place may be used as long as a part of the insulator 3 is fixed to the bus bar main body 2.

However, it is preferable that the left side surface 3a side and the right side surface 3b side of the insulator 3 are heat-shrunk and fixed to the bus bar main body 2. This is because a malfunction such as current not flowing between energizable members may occur if the position of the insulator 3 shifts and the insulator 3 hangs over (comes in contact with) the left bolt hole 2a1 and/or the right bolt hole 2b1. Therefore, it is preferable that the left side surface 3a side and the right side surface 3b side of the insulator 3 are heat-shrunk and fixed to the bus bar main body 2.

Also, in the present embodiment, an example has been shown in which the identification member 4 is fixed to the upper surface 2c of the bus bar main body 2. However, the present invention is not limited thereto, and any method may be used as long as abnormal heat generation of the bus bar main body 2 can be identified. For example, in the present embodiment, an example has been shown in which the letter M ("NG" is exemplified in the figure) stands out for easy identification, but an identification member without the letter M may also be used. Even in this manner, when the insulator 3 comes in close contact with the upper surface 4a of the identification member 4 as shown in FIG. 3(c), this part appears to be protruding as shown in FIG. 2(a). Thus, the bus bar main body 2 can be identified as having generated abnormal heat. Also, in the present embodiment, an example has been shown in which the identification member 4 is fixed to the upper surface 2c of the bus bar main body 2, but the identification member 4 does not have to be fixed as shown in FIG. 4. That is, as shown in FIG. 4(a), a spherical identification member 4A is placed in the interior S of the insulator 3 without being fixed. When the bus bar main body 2 generates abnormal heat, the insulator 3 is heat-shrunk due to the heat, and as shown in FIG. 4(b), the insulator 3 is completely fixed to the upper surface 2c and the lower surface 2d of the bus bar main body 2. At this time, since the insulator 3 comes in close contact with the identification member 4A as shown in FIG. 4(b), this part appears to be protruding. Therefore, even in this manner, the bus bar main body 2 can be identified as having generated abnormal heat. Needless to say, the identification members 4, 4A may have any shape, such as a rectangular shape, a spherical shape, a star shape, or a cross shape.

Also, in addition to the bus bar main body exemplified in the present embodiment, the present invention can be applied to a flexible bus bar such as a laminated one, a braided wire, or a bundle of electric wires.

### Reference Signs List

- 1: bus bar

- 2: bus bar main body
- 2a: left side surface
- 2a1: left bolt hole (through hole)
- 2b: right side surface
- 2b1: right bolt hole (through hole)
- 3: insulator
- 4, 4A: identification member
- s: interior (of insulator)

## Claims

1. A bus bar (1) having a bus bar main body (2) and an insulator (3) covering a part of the bus bar main body, wherein
the insulator (3) has an interior (S) formed hollow and is made of heat-shrinkable resin, and
the bus bar main body (2) is inserted into the hollow, and
an identification member (4, 4A) that can identify abnormal heat generation when the insulator (3) is heat-shrunk due to the abnormal heat generation is provided in the hollow.

2. The bus bur according to claim 1, wherein the bus bar main body (2) has through holes (2a1, 2b1) formed at both end sides (2a, 2b), and
in fixing a part of the insulator (3) to the bus bar main body (2), the insulator (3) is fixed to the bus bar main body (2) by heat-shrinking both end sides of the insulator (3) so as not to come in contact with the through holes (2a1, 2b1).

## Patentansprüche

1. Sammelschiene (1), aufweisend einen Sammelschienen-Hauptkörper (2) und einen Isolator (3), der einen Teil des Sammelschienen-Hauptkörpers abdeckt, wobei
der Isolator (3) einen Innenraum (S) aufweist, der hohl gebildet ist und aus wärmeschrumpfbarem Harz besteht, und
der Sammelschienen-Hauptkörper (2) in den Hohlraum eingesetzt ist, und
ein Identifikationselement (4, 4A), das abnormale Wärmeerzeugung identifizieren kann, wenn der Isolator (3) durch die abnormale Wärmeerzeugung wärmegeschrumpft ist, in dem Hohlraum bereitgestellt ist.

2. Sammelschiene nach Anspruch 1, wobei der Sammelschienen-Hauptkörper (2) Durchgangslöcher (2a1, 2b1) aufweist, die an beiden Endseiten (2a, 2b) gebildet sind, und
beim Befestigen eines Teils des Isolators (3) an dem Sammelschienen-Hauptkörper (2), der Isolator (3) an dem Sammelschienen-Hauptkörper (2) durch Wärmeschrumpfen beider Endseiten des Isolators (3) befestigt wird, um nicht mit den Durchgangslöchern (2a1, 2b1) in Kontakt zu kommen.

## Revendications

1. Barre omnibus (1) présentant un corps principal (2) de barre omnibus et un isolant (3) recouvrant une partie du corps principal de barre omnibus, dans laquelle
l'isolant (3) présente un intérieur (S) formé creux et est fait de résine thermorétractable, et
le corps principal (2) de barre omnibus est inséré dans le creux, et
un organe d'identification (4, 4A), qui est apte à identifier une génération anormale de chaleur lorsque l'isolant (3) est thermorétracté en raison de la génération anormale de chaleur, est prévu dans le creux.

2. Barre omnibus selon la revendication 1, dans laquelle le corps principal (2) de barre omnibus présente des trous traversants (2a1, 2b1) formés sur les deux côtés d'extrémité (2a, 2b), et
lors de la fixation d'une partie de l'isolant (3) au corps principal (2) de barre omnibus, l'isolant (3) est fixé au corps principal (2) de barre omnibus par thermorétraction sur les deux côtés d'extrémité de l'isolant (3) de manière à ne pas venir en contact avec les trous traversants (2a1, 2b1).
